# EUROPÄISCHE PATENTSCHRIFT

(11) **EP 3 017 737 B1**
(45) Veröffentlichungstag und Bekanntmachung des Hinweises auf die Patenterteilung: **14.06.2017**
(21) Anmeldenummer: 15190825.8
(22) Anmeldetag: 21.10.2015
(51) Int. Cl.: A47J 43/07, A47J 27/00, A47J 27/21

(54) **KÜCHENMASCHINE MIT POSITIONIERUNGSEINRICHTUNG**
KITCHEN APPLIANCE WITH POSITIONING DEVICE
ROBOT MÉNAGER DOTÉ D'UN DISPOSITIF DE POSITIONNEMENT

(30) Priorität: 30.10.2014 DE 102014115788
(43) Veröffentlichungstag der Anmeldung: 11.05.2016
(73) Patentinhaber: Vorwerk & Co. Interholding GmbH, 42275 Wuppertal (DE)
(72) Erfinder: Braun, Thomas, 42327 Wuppertal (DE); Hackert, Georg, 44869 Bochum (DE); Starflinger, Frank, 44793 Bochum (DE)
(74) Vertreter: Müller, Enno

(56) Entgegenhaltungen:
- WO-A2-03/001952
- DE-A1-102010 016 090
- US-A1- 2013 074 706

## Beschreibung

Die Erfindung betrifft eine Küchenmaschine, insbesondere ein Mixgerät, mit einem Gehäuse, an welchem ein Gefäß anordenbar ist, wobei das Gehäuse einen Gefäßaufnahmebereich aufweist, mit welchem das Gefäß verbindbar ist, wobei das Gefäß und der Gefäßaufnahmebereich elektrische Kontakte zum Anschluss einer elektrischen Einrichtung des Gefäßes, insbesondere einer Heizeinrichtung und/oder einer Messeinrichtung, an eine Spannungsversorgung der Küchenmaschine aufweisen.

Küchenmaschinen der in Rede stehenden Art sind bekannt. Diese weisen beispielsweise ein abnehmbares Gefäß auf, in welchem beispielsweise ein Rührwerk zur Zubereitung von Speisen angeordnet ist. Das Rührwerk wird über einen küchenmaschinenseitigen Elektromotor angetrieben, wozu der Gefäßaufnahmebereich und das Gefäß korrespondierende Kupplungselemente aufweisen. Darüber hinaus ist es ebenfalls bekannt, eine Heizeinrichtung an dem Gefäß anzubringen, beispielsweise in einem Bodenbereich des Gefäßes. Darüber hinaus können an dem Gefäß ebenfalls elektrische Messeinrichtungen zur Messung einer Temperatur, eines Druckes oder ähnlichem vorgesehen sein.

Um die vorgenannten elektrischen Einrichtungen betreiben zu können, sind an dem Gefäß und dem Gehäuse der Küchenmaschine elektrische Kontakte vorgesehen, welche zur Herstellung einer elektrischen Verbindung aus einer Trennstellung in eine Kontaktstellung versetzbar sind.

Die Druckschrift WO 2003/001952 A3 offenbart beispielsweise ein Gefäß mit einem heizbaren Gefäßboden und wasserdichten elektrischen Kontakten zur Verbindung mit entsprechenden elektrischen Kontakten einer Küchenmaschine.

Um die elektrischen Kontakte des Gefäßes und die elektrischen Kontakte des Gefäßaufnahmebereiches in eine Kontaktstellung zu versetzen, ist es bekannt, das Gehäuse der Küchenmaschine so auszubilden, dass ein Nutzer der Küchenmaschine durch die Form des Gehäuses dabei unterstützt wird, das Gefäß in die Kontaktstellung zu bringen. Die Druckschrift WO 2003/075727 A1 offenbart beispielsweise eine geometrische Form des Gehäuses, welche zwei gegenüberliegend angeordnete Backen aufweist, die das Gefäß jeweils teilweise umfangsmäßig umgreifen und V-förmig begrenzte Aussparungsbereiche zwischen sich aufnehmen. Die Aussparungsbereiche zeigen die gewünschte Orientierung des Gefäßes innerhalb des Gehäuses an, wobei die manuelle Positionierung durch den Nutzer durch eine korrespondierende Formgebung von Gefäß und Gehäuse unterstützt wird.

Aus der US 2013/0074706 A1 ist eine Küchenmaschine mit einem Gefäß bekannt, wobei die Gefäßaufnahme elektrische Kontakte aufweist, die mit entsprechenden Gegenkontakten am Gefäß, wenn das Gefäß auf der Gefäßaufnahme steht, zusammenwirken. Die Kontakte müssen durch eine drehwinkelgerechte Übereinstimmung von Gefäß und Gefäßaufnahme zueinander gebracht werden.

Ausgehend von dem vorgenannten Stand der Technik ist es Aufgabe der Erfindung, eine alternative und komfortablere Möglichkeit zur Positionierung der elektrischen Kontakte zu schaffen.

Zur Lösung der vorgenannten Aufgabe schlägt die Erfindung vor, dass die Küchenmaschine und/ oder das Gefäß eine Positionierungseinrichtung aufweisen, welche ausgebildet ist, die elektrischen Kontakte des Gefäßes und die elektrischen Kontakte des Gefäßaufnahmebereiches aktiv zueinander zu positionieren, so dass diese aus einer Trennstellung in eine Kontaktstellung versetzbar sind, um eine elektrische Verbindung zwischen dem Gefäß und der Küchenmaschine herzustellen, wobei die Kontakte des Gefäßes beweglich an dem Gefäß und/ oder die Kontakte des Gefäßaufnahmebereiches beweglich an dem Gefäßaufnahmebereich angeordnet sind.

Gemäß der Erfindung wird die Küchenmaschine mit einer Positionierungseinrichtung ausgestattet, welche die elektrischen Kontakte des Gefäßes und/ oder die elektrischen Kontakte des Gefäßaufnahmebereiches aktiv verlagert, um eine elektrische Verbindung zwischen dem Gefäß und der Küchenmaschine herzustellen. Bisher wird die Positionierung der elektrischen Kontakte über eine manuelle Positionierung des Gefäßes relativ zu der Küchenmaschine erreicht, wobei das Gefäß passiv durch entsprechend ausgeformte Teilbereiche des Gehäuses der Küchenmaschine in Verbindung mit der Gewichtskraft des Gefäßes erfolgt. Nunmehr erfolgt die Positionierung der Kontakte nicht mittels einer Positionierung des Gefäßes relativ zu dem Gehäuse der Küchenmaschine, sondern vielmehr mittels einer Positionierung der Kontakte selbst, welche beweglich an dem Gefäß bzw. dem Gefäßaufnahmebereich angeordnet sind. Um die Kontakte zu positionieren ist es somit nicht mehr erforderlich, das Gefäß in seiner Gesamtheit relativ zu dem Gefäßaufnahmebereich zu positionieren.

Die bewegliche Anordnung der elektrischen Kontakte an dem Gefäß bzw. dem Gefäßaufnahmebereich kann auf unterschiedliche Art und Weise erfolgen.

Gemäß einer Ausführungsvariante wird vorgeschlagen, dass die Positionierungseinrichtung einen Drehteller aufweist, auf welchem die Kontakte des Gefäßes oder die Kontakte des Gefäßaufnahmebereiches angeordnet sind. Der Drehteller kann über einen Schleifkontakt an eine Spannungsversorgung angeschlossen sein und unter Beibehaltung der Kontaktierung eine Bewegung der elektrischen Kontakte relativ zu dem Gefäß bzw. dem Gefäßaufnahmebereich erlauben. Die Positionierungseinrichtung, insbesondere der Drehteller, kann dabei grundsätzlich dem Gefäß oder dem Gehäuse der Küchenmaschine zugeordnet sein. Alternativ können sowohl das Gefäß als auch das Gehäuse je eine eigene Positionierungseinrichtung aufweisen, welche miteinander interagieren. Sofern die Positionierungseinrichtung an dem Gefäß angeordnet ist, werden die elektrischen Kontakte des Gefäßes mittels der Rotation des Drehtellers aktiv positioniert, während die elektrischen Kontakte des Gehäuses ortsfest bleiben. Sofern das Gehäuse, bzw. der Gefäßaufnahmebereich, eine Positionierungseinrichtung aufweist, werden die elektrischen Kontakte des Gehäuses aktiv positioniert, während die elektrischen Kontakte des Gefäßes in Bezug auf das Gefäß ortsfest bleiben.

Alternativ zu einem Drehteller kann die Positionierungseinrichtung auch andere bewegliche Verstelleinrichtungen aufweisen, beispielsweise einen x-y-Verstelltisch oder ähnliches.

Es wird vorgeschlagen, dass die Positionierungseinrichtung einen Elektromotor zur Positionierung der Kontakte, beispielsweise durch Rotation des Drehtellers, aufweist. Mit Hilfe des Elektromotors wird die Positionierung der elektrischen Kontakte automatisiert. Der Nutzer der Küchenmaschine muss die elektrischen Kontakte des Gefäßes und der Küchenmaschine nicht mehr manuell zueinander ausrichten. Die elektromotorisch arbeitende Positionierungseinrichtung weist dabei neben dem Drehteller einen Elektromotor und vorteilhaft eine Stellmechanik auf, wie beispielsweise einen Zahnkranz, einen linear verschieblichen Aktor oder ähnliches. Die Stellmechanik wird mittels des Elektromotors angetrieben und bewirkt beispielsweise die Rotation eines Drehtellers, auf welchem die elektrischen Kontakte angeordnet sind. Sofern die Kontakte des Gefäßes und die Kontakte des Gehäuses der Küchenmaschine noch keine Position aufweisen, welche die Herstellung einer elektrischen Verbindung erlaubt, können die elektrischen Kontakte des Gefäßes und/oder die elektrischen Kontakte des Gehäuses durch eine Rotation des Drehtellers in eine Position gebracht werden, welche einer Kontaktstellung der elektrischen Kontakte entspricht. Vorteilhaft können die elektrischen Kontakte des Gefäßes beispielsweise auf einer Kreisbahn angeordnet sein, wobei die elektrischen Kontakte des Gehäuses ebenfalls auf einer Kreisbahn mit gleichem Radius angeordnet ist, so dass die elektrischen Kontakte bei einer Rotation der Drehplatte des Gefäßes und/ oder des Gehäuses zueinander korrespondierend ausgerichtet werden können bis eine Kontaktstellung erreicht ist. In der Kontaktstellung liegen die elektrischen Kontakte in vertikaler Projektion vorteilhaft übereinander. Die elektrischen Kontakte können dabei Steckkontakte, Flächenkontakte (beispielsweise auf einer strukturierten Leiterplatte) oder ähnliches sein.

Alternativ wird vorgeschlagen, dass die Positionierungseinrichtung Federelemente aufweist, mittels welcher die Kontakte des Gefäßes und/oder die Kontakte des Gefäßaufnahmebereiches federbeaufschlagt sind. Dabei können die elektrischen Kontakte selbst als Federelemente ausgebildet sein oder mit einem separaten Federelement in Wirkverbindung stehen. Sofern die Kontakte als Federelemente ausgebildet sind, können die Kontakte beispielsweise aus einem elektrisch leitenden Material hergestellt oder mit einem solchen beschichtet sein. Sofern es sich bei dem Kontakt und dem Federelement um separate Bauteile handelt, kann der Kontakt benachbart zu einem Federelement angeordnet sein, wobei der Kontakt bei Expansion des Federelementes verschoben wird. Die mit Federelementen ausgebildete Positionierungseinrichtung funktioniert ohne einen separaten Elektromotor. Beispielsweise kann die Positionierungseinrichtung an dem Gehäuse der Küchenmaschine angeordnet sein, wobei ein das Federelement an einer Expansion hinderndes Bauteil durch ein eingesetztes Gefäß zur Seite gedrückt wird, woraufhin das Federelement expandieren und gegen einen elektrischen Kontakt wirken kann. Durch das Einsetzen des Gefäßes kommt es somit zu einer Expansion des Federelementes und damit zu einer Positionierung des von dem Federelement verschobenen elektrischen Kontaktes. Der elektrische Kontakt des Gehäuses wird dabei soweit verschoben bis er auf einen korrespondierenden elektrischen Kontakt des Gefäßes stößt, der in den Verschiebeweg des Kontaktes des Gehäuses eingreift. Bei einer Trennung des Gefäßes von dem Gefäßaufnahmebereich der Küchenmaschine kann es analog zu einer Rückstellung, d. h. Kompression, des Federelementes kommen, so dass das Federelement für eine erneute Kontaktierung expandieren kann. Die Rückstellung des Federelementes erfolgt beispielsweise dadurch, dass ein von dem Gefäß beiseite gedrücktes zweites Federelement bei Entnahme des Gefäßes expandiert und gegen das erste Federelement wirkt, so dass dieses erneut in die komprimierte Ausgangsposition verlagert wird. Insgesamt wirkt die Positionierungseinrichtung wie ein federbeaufschlagter Schalter, welcher initiiert durch das Einsetzen oder Entfernen des Gefäßes relativ zu dem Gehäuse eine Positionierung der elektrischen Kontakte bewirkt.

Mit der Erfindung wird ebenfalls eine Küchenmaschine, insbesondere ein Mixgerät, mit einem Gehäuse, an welchem ein Gefäß anordenbar ist, vorgeschlagen, wobei das Gehäuse einen Gefäßaufnahmebereich aufweist, mit welchem das Gefäß verbindbar ist, wobei das Gefäß und der Gefäßaufnahmebereich elektrische Kontakte zum Anschluss einer elektrischen Einrichtung des Gefäßes, insbesondere einer Heizeinrichtung und/ oder einer Messeinrichtung, an eine Spannungsversorgung der Küchenmaschine aufweisen, wobei die Küchenmaschine und/oder das Gefäß eine Positionierungseinrichtung aufweisen, welche ausgebildet ist, die elektrischen Kontakte des Gefäßes und die elektrischen Kontakte des Gefäßaufnahmebereiches so zueinander zu positionieren, dass diese aus einer Trennstellung in eine Kontaktstellung versetzbar sind, um eine elektrische Verbindung zwischen dem Gefäß und der Küchenmaschine herzustellen, wobei die Positionierungseinrichtung Magnete aufweist, und wobei ein erster Magnet an dem Gefäßaufnahmebereich und ein zweiter Magnet an dem Gefäß angeordnet ist.

Gemäß dieser Ausführungsvariante verfügt die Küchenmaschine über eine Positionierungseinrichtung, welche korrespondierende Magnete an dem Gefäßaufnahmebereich und dem Gefäß aufweist. Einer der korrespondierenden Magnete kann dabei ein magnetisierbarer oder magnetischer Teilbereich des Gefäßaufnahmebereiches bzw. des Gefäßes sein. Insbesondere kann ein Teilbereich des Gefäßes oder des Gefäßaufnahmebereiches ein eisenhaltiges und/oder nickelhaltiges Material aufweisen. Vorteilhaft handelt es sich bei zumindest einem der Magnete um einen Permanentmagnet, so dass die Positionierungseinrichtung gleichzeitig unabhängig von einer elektrischen Spannungsversorgung ist. Dabei kann der Magnet entweder unmittelbar an dem Gefäß bzw. dem Gefäßaufnahmebereich angeordnet sein, oder alternativ an einem beweglich mit dem Gefäß bzw. dem Gefäßaufnahmebereich verbundenen Bauteil, welches elektrische Kontakte aufweist. Im erstgenannten Fall, bei welchem die Magnete unmittelbar an dem Gefäß bzw. dem Gefäßaufnahmebereich angeordnet sind, erfolgt die Positionierung der elektrischen Kontakte durch eine Bewegung des Gefäßes relativ zu dem Gefäßaufnahmebereich. Sofern ein Nutzer das Gefäß - bezogen auf eine Kontaktstellung "dejustiert" in den Gefäßaufnahmebereich einsetzt, kommt es durch die magnetische Anziehungskraft zu einer Verlagerung des Gefäßes innerhalb des Gefäßaufnahmebereiches, vorteilhaft zu einer Rotation, bis die gewünschte Kontaktstellung erreicht ist. Im zweitgenannten Fall, bei welchem die Magnete an beweglich mit dem Gefäß bzw. dem Gefäßaufnahmebereich verbundenen Bauteilen angeordnet sind, kommt es dann, wenn der Nutzer das Gefäß nicht in der Kontaktstellung in den Gefäßaufnahmebereich einsetzt, zu einer Bewegung der die Magnete - und auch die elektrischen Kontakte - aufweisenden Bauteile. Aufgrund der Magnetkraft werden die Bauteile aufeinander zu bewegt bis die Kontaktstellung zur Herstellung einer elektrischen Verbindung zwischen dem Gefäß und dem Gefäßaufnahmebereich der Küchenmaschine erreicht ist.

Die Erfindung schlägt des Weiteren vor, dass die Küchenmaschine eine Detektionseinrichtung aufweist, welche ausgebildet ist, eine aktuelle Position der Kontakte zu detektieren. Die Detektionseinrichtung kann in Verbindung mit allen zuvor dargestellten Küchenmaschinen eingesetzt werden, die eine erfindungsgemäße Positionierungseinrichtung aufweisen, d. h. sowohl in Verbindung mit einer aktiven Positionierung der Kontakte durch Motorkraft oder Federkraft, als auch in Verbindung mit einer passiven Positionierung durch Magnetkraft. Dabei detektiert die Detektionseinrichtung, ob die Kontakte des Gefäßes und des Gefäßaufnahmebereiches aktuell in einer Trennstellung oder in einer Kontaktstellung angeordnet sind. Die aktuelle Position der Kontakte (Trennstellung bzw. Kontaktstellung) kann in den Fällen, in welchen die Kontakte des Gefäßaufnahmebereiches ortsfest sind alleine anhand der Position der Kontakte des Gefäßes erkannt werden. In anderen Fällen, beispielsweise wenn sowohl die Kontakte des Gefäßes als auch die Kontakte des Gefäßaufnahmebereiches an beweglichen Bauteilen angeordnet sind, empfiehlt sich eine Detektion der Position aller Kontakte.

Die Detektionseinrichtung kann eine optische Detektionseinrichtung, eine Ultraschalldetektionseinrichtung, eine Induktionsdetektionseinrichtung oder ähnliches sein. Eine optische Detektionseinrichtung kann beispielsweise einen üblichen Kamerachip aufweisen, beispielsweise einen CCD-Chip oder CMOS-Chip. Alternativ ist es auch möglich, andere optische Detektionseinrichtungen, welche beispielsweise Gebrauch von Lichtschrankenanordnungen machen, zu verwenden. Der Detektionseinrichtung kann in jedem Fall eine Anzeigeeinheit mit einem Display zugeordnet sein, auf welchem ein Nutzer der Küchenmaschine erkennen kann, ob sich die elektrischen Kontakte des Gefäßes und des Gefäßaufnahmebereiches in einer Kontaktstellung oder einer Trennstellung befinden. Sofern aktuell beispielsweise nur eine Trennstellung besteht, kann der Nutzer das Gefäß manuell zu dem Gefäßaufnahmebereich ausrichten, bis auf dem Display angezeigt wird, dass die Kontaktstellung erreicht ist. Das Erreichen der Kontaktstellung kann zusätzlich durch ein akustisches Signal (Signalton) angezeigt werden.

Es wird des Weiteren vorgeschlagen, dass die Detektionseinrichtung der Positionierungseinrichtung zugeordnet ist. Dadurch lässt sich das Detektionssignal der Detektionseinrichtung für einen automatischen Betrieb der Positionierungseinrichtung nutzen. Dafür wird das Detektionsergebnis beispielsweise für eine Auswertung der aktuellen Stellung an eine Auswerte- und Steuereinrichtung weitergeleitet, welche einen Positionierungsbefehl an die Positionierungseinrichtung sendet, der geeignet ist, die elektrischen Kontakte aus der Trennstellung in die Kontaktstellung zu versetzen.

Insbesondere wird vorgeschlagen, dass die Küchenmaschine eine Auswerte- und Steuereinrichtung aufweist, welche ausgebildet ist, eine von der Detektionseinrichtung detektierte aktuelle Position der Kontakte mit einer für die elektrische Verbindung notwendigen Position der Kontakte zu vergleichen und in Abhängigkeit von dem Vergleichsergebnis einen Positionierungsbefehl an die Positionierungseinrichtung zu übermitteln. Durch diese Ausgestaltung lässt sich eine vollautomatische Positionierung der elektrischen Kontakte in die Kontaktstellung bewirken. Erfindungsgemäß erfolgt dabei ein Ist-/Soll-Vergleich, bei welchem eine aktuelle Position der Kontakte mit einer gewünschten Position der Kontakte verglichen wird und in Abhängigkeit von dem Vergleichsergebnis ein Positionierungsbefehl an die Positionierungseinrichtung übermittelt wird. Das Vergleichsergebnis zwischen der Ist-Position und der Soll-Position der Kontakte kann beispielsweise einen Winkelbereich angeben, um welchen das Gefäß relativ zu dem Gefäßaufnahmebereich rotiert werden muss, um in die Kontaktstellung zu gelangen. Der Positionierungsbefehl beinhaltet dann entsprechend einen Rotationsbefehl, welcher beispielsweise einen Drehteller des Gefäßaufnahmebereiches in die gewünschte Kontaktstellung verlagert, so dass die elektrischen Kontakte des Gefäßes und die elektrischen Kontakte des Gefäßaufnahmebereiches korrespondierend in einer Kontaktstellung angeordnet sind, beispielsweise bezogen auf eine vertikale Projektion der Küchenmaschine übereinander liegen.

Im Folgenden wird die Erfindung anhand eines Ausführungsbeispiels näher erläutert. Es zeigen:
- Figur 1:: eine Küchenmaschine mit einem daran angeordneten Gefäß in einer perspektivischen Ansicht,
- Figur 2:: die Küchenmaschine gemäß Figur 1 ohne Gefäß,
- Figur 3:: einen Teilbereich des Gefäßes gemäß einer ersten Ausführungsform in einer perspektivischen Ansicht von unten,
- Figur 4:: einen Teilbereich einer Küchenmaschine mit daran angeordnetem Gefäß gemäß Figur 3 in einem vertikalen Querschnitt,
- Figur 5:: ein vergrößert dargestellter Teilbereich aus Figur 4,
- Figur 6:: die Küchenmaschine mit daran angeordnetem Gefäß gemäß Figur 4 in einer Draufsicht,
- Figur 7:: einen vergrößert dargestellten Teilbereich eines Gefäßaufnahmebereiches einer Küchenmaschine gemäß einer zweiten Ausführungsform,
- Figur 8:: einen horizontalen Querschnitt durch den Teilbereich der Küchenmaschine gemäß Figur 7 in einer Kontaktstellung,
- Figur 9:: einen horizontalen Querschnitt gemäß Figur 8 in einer Trennstellung,
- Figur 10:: einen vergrößert dargestellten Teilbereich eines Gefäßaufnahmebereiches einer Küchenmaschine gemäß einer dritten Ausführungsform.

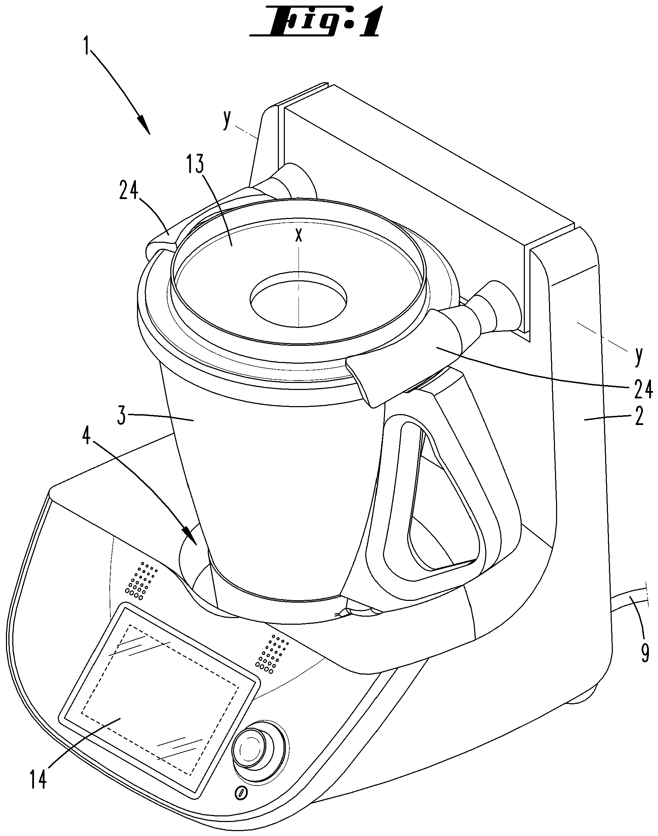

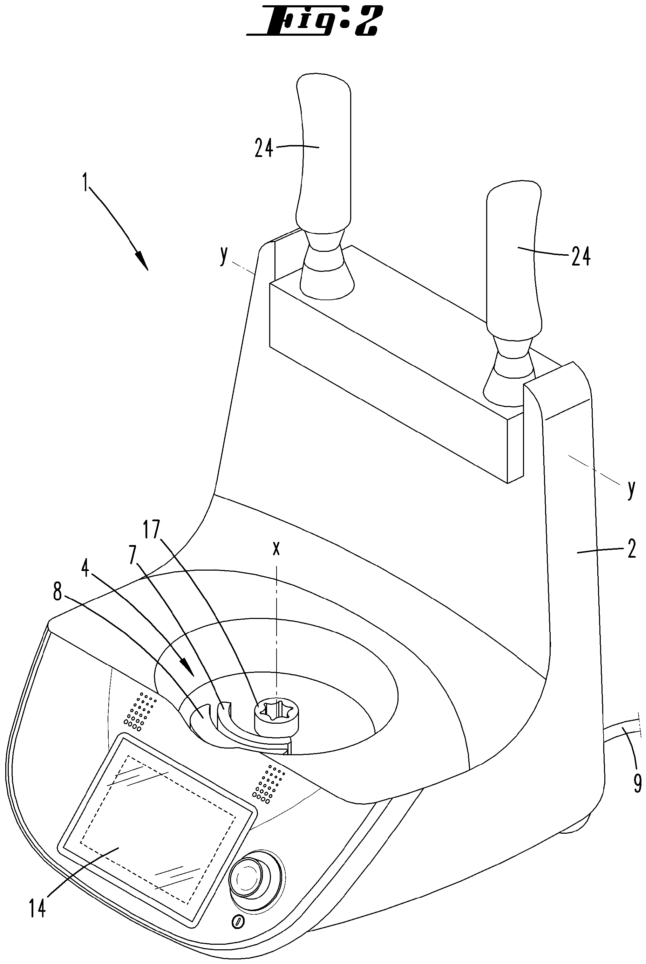

Dargestellt und beschrieben ist zunächst mit Bezug zu den Figuren 1 und 2 eine Küchenmaschine 1, hier ein Mixgerät, mit einem Gehäuse 2, an welchem ein Gefäßaufnahmebereich 4 zum Einsetzen eines Gefäßes 3 ausgebildet ist.

Das Gefäß 3 kann beispielsweise ein Rührwerk 16 aufweisen, welches an einen Rührwerkanschluss 17 des Gefäßaufnahmebereiches 4 anschließbar ist. Das Anschließen erfolgt durch das Einsetzen des Gefäßes 3 in den Gefäßaufnahmebereich 4 der Küchenmaschine 1. Das Rührwerk 16 wird über einen in der Küchenmaschine 1 unterhalb des Gefäßaufnahmebereiches 4 angeordneten, nicht näher dargestellten Elektroantrieb betrieben. Die Bedienung der Küchenmaschine 1 erfolgt wie üblich über Drehknöpfe und Schalter. Zusätzlich kann die Küchenmaschine 1 ein Display 14 zur Anzeige von Auswahloptionen oder ähnlichem aufweisen.

Wie in Figur 1 dargestellt, ist das Gefäß 3 mittels eines Deckels 13 verschließbar. In einem in den Gefäßaufnahmebereich 4 der Küchenmaschine 1 eingesetzten Zustand des Gefäßes 3 ist der Deckel 13 mit dem Gefäß 3 durch Verriegelungselemente 24 der Küchenmaschine 1 verriegelbar. Die Verriegelungselemente 24 sind hier beispielsweise Verriegelungswalzen.

Der Gefäßaufnahmebereich 4 ist hier im Wesentlichen formkorrespondierend zu dem unteren Teilbereich des Gefäßes 3 ausgebildet. Das Gefäß 3 ist innerhalb des Gefäßaufnahmebereiches 4 in unterschiedliche Rotationspositionen drehbar, so dass der Nutzer der Küchenmaschine 1 nicht darauf achten muss, das Gefäß 3 in Umfangsrichtung mit einer bestimmten Orientierung in den Gefäßaufnahmebereich 4 einzusetzen.

In Figur 2 ist die Küchenmaschine 1 ohne ein in den Gefäßaufnahmebereich 4 eingesetztes Gefäß 3 dargestellt. Um das Gefäß 3 aus dem Gefäßaufnahmebereich 4 entnehmen zu können, sind die Verriegelungselemente 24 nach oben verschwenkt. In dem Gefäßaufnahmebereich 4 ist zentral der Rührwerkanschluss 17 zur Verbindung mit dem Rührwerk 16 des Gefäßes 3 angeordnet. Das Rührwerk 16 und der Rührwerkanschluss 17 sind formkorrespondierend so ausgebildet, dass ein Drehmoment von dem Rührwerkanschluss 17 auf das Rührwerk 16 übertragen werden kann. An dem Gefäßaufnahmebereich 4 sind elektrische Kontakte 7, 8 angeordnet, mit welchen eine elektrische Verbindung zu elektrischen Kontakten 5, 6 des Gefäßes 3 hergestellt werden kann. Die elektrischen Kontakte 7, 8 des Gefäßaufnahmebereiches 4 sind bogenförmig entlang einer Kreisbahn, d. h. als Kreisbahnabschnitte, ausgebildet, wobei jeder der elektrischen Kontakte 7, 8 auf einer abweichenden Kreisbahn liegt. Die elektrischen Kontakte 7, 8 sind in radialer Richtung der Kreisbahnen parallel nebeneinander angeordnet, wobei ein erster elektrischer Kontakt 7 auf einer Kreisbahn mit kleinerem Radius angeordnet ist als ein zweiter elektrischer Kontakt 8. Zwischen den elektrischen Kontakten 7, 8 ist ein Spaltbereich zur Anordnung von korrespondierenden Kontakten 5, 6 eines Gefäßes 3 ausgebildet. Dieser zwischen den elektrischen Kontakten 7, 8 ebenfalls bogenförmig ausgebildete Spaltbereich kann die elektrischen Kontakte 5, 6 des Gefäßes 3 in Umfangsrichtung einer Kreisbahn stufenlos aufnehmen, so dass auch bei unterschiedlicher Orientierung des Gefäßes 3 zu dem Gefäßaufnahmebereich 4 eine elektrische Verbindung zwischen dem Gefäß 3 und dem Gefäßaufnahmebereich 4 bestehen kann. Es ist lediglich erforderlich, dass die elektrischen Kontakte 5, 6 des Gefäßes 3 zwischen den elektrischen Kontakten 7, 8 des Gefäßaufnahmebereiches 4 aufgenommen sind. Insofern gibt der Winkelbereich, den die elektrischen Kontakte 7, 8 des Gefäßaufnahmebereiches 4 aufspannen, den Toleranzbereich für eine mögliche Kontaktstellung zwischen den elektrischen Kontakten 5, 6 des Gefäßes und den elektrischen Kontakten 7, 8 des Gefäßaufnahmebereiches an.

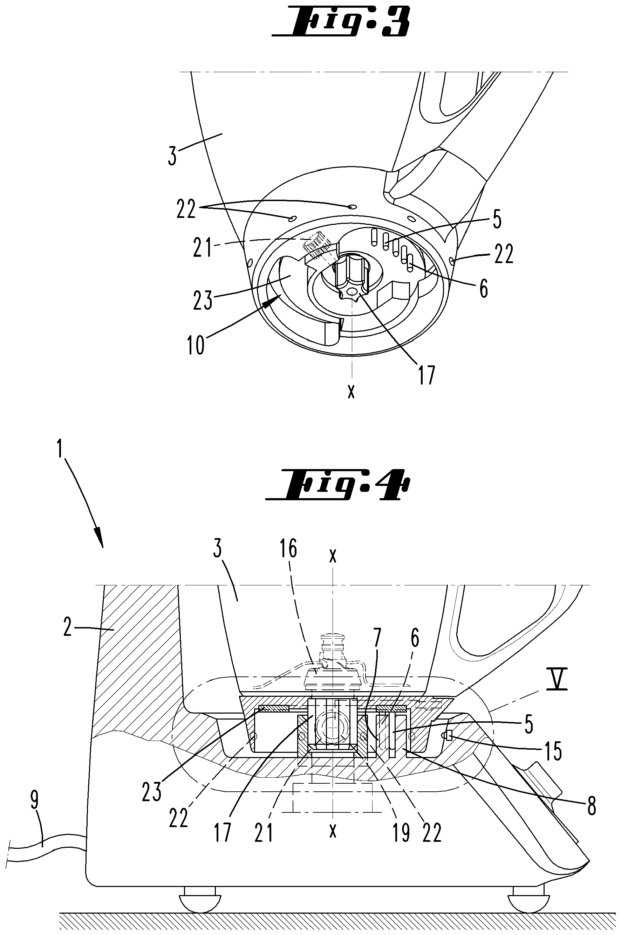

Die Figuren 3 bis 6 zeigen im Folgenden eine erste Ausführungsvariante der Erfindung, bei welcher eine Positionierungseinrichtung 10 an dem Gefäß 3 angeordnet ist.
Figur 3 zeigt einen unteren Teilbereich des Gefäßes 3, welcher den Rührwerkanschluss 17 sowie eine Mehrzahl elektrischer Kontakte 5, 6 zur Herstellung einer elektrischen Verbindung mit dem Gefäßaufnahmebereich 4 der Küchenmaschine 1 aufweist. Die elektrischen Kontakte 5, 6 (hier insgesamt fünf Kontakte) sind entlang einer Kreisbahn hintereinander angeordnet, wobei die elektrischen Kontakte 5, 6 auch bei einer Rotation des Gefäßes 3 innerhalb des Gefäßaufnahmebereiches 4 auf dieser Kreisbahn verbleiben.

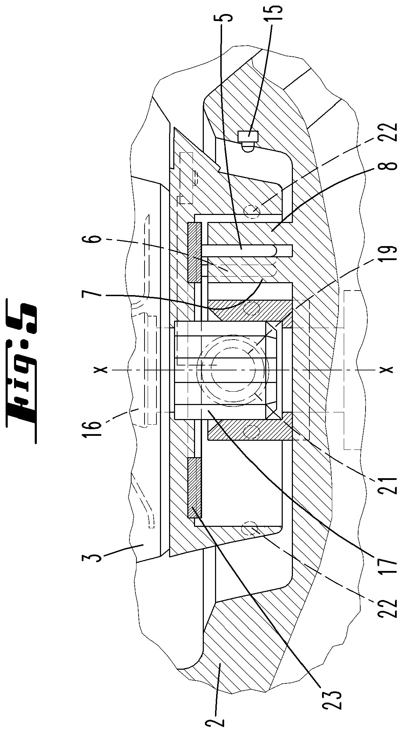

Figur 4 zeigt einen vertikalen Querschnitt des Gefäßaufnahmebereiches 4 der Küchenmaschine 1, in welchen das Gefäß 3 eingesetzt ist. Figur 5 zeigt in vergrößerter Darstellung einen Teilbereich davon.

Im Einzelnen zeigt die vergrößerte Darstellung gemäß Figur 5 den unteren Teilbereich des Gefäßes 3 mit einem Teilbereich des Rührwerkes 16, welches mit dem Rührwerkanschluss 17 des Gefäßaufnahmebereiches 4 der Küchenmaschine 1 verbunden ist. In dem dargestellten Querschnitt ist zu erkennen, dass die elektrischen Kontakte 5, 6 des Gefäßes 3 zwischen die elektrischen Kontakte 7, 8 des Gefäßaufnahmebereiches 4 greifen. Die elektrischen Kontakte 5, 6 des Gefäßes 3 sind auf einer Kreisbahn angeordnet, welche der Kreisbahn des zwischen den elektrischen Kontakten 7, 8 des Gefäßaufnahmebereiches 4 ausgebildeten Spaltbereiches entspricht, so dass die elektrischen Kontakte 5, 6 des Gefäßes 3 auch bei einer Rotation des Gefäßes 3 innerhalb des Gefäßaufnahmebereiches 4 der Küchenmaschine 1 mit den elektrischen Kontakten 7, 8 des Gefäßaufnahmebereiches 4 in Eingriff bleiben können. Die Kontaktstellung zwischen den elektrischen Kontakten 5, 6 und den elektrischen Kontakten 7, 8 bleibt solange bestehen, wie sich die Kreisbahnabschnitte der elektrischen Kontakte 5, 6 des Gefäßes 3 und der elektrischen Kontakte 7, 8 des Gefäßaufnahmebereiches 4 noch überdecken. Die Kontaktstellung kann somit einen gewissen Winkelbereich aufspannen, beispielsweise indem ein Kreisbahnabschnitt der elektrischen Kontakte 7, 8 des Gefäßaufnahmebereiches 4 größer ist als ein Kreisbahnabschnitt, der von den elektrischen Kontakten 5, 6 des Gefäßes 3 aufgespannt wird.

Die Positionierungseinrichtung 10 weist einen Elektromotor 19, eine Stellmechanik 21 sowie einen Drehteller 23 auf, auf welchem die elektrischen Kontakte 5, 6 des Gefäßes 3 angeordnet sind. Der Elektromotor 19 ist an eine Spannungsversorgung (hier nicht dargestellt) angeschlossen, beispielsweise eine Batterie. Bei einer Betätigung der Positionierungseinrichtung 10 wirkt der Elektromotor 19 auf die Stellmechanik 21 ein, welche hier beispielsweise als Zahnrad ausgebildet ist. Durch die Drehung des Zahnrades rotiert der Drehteller 23 um die Drehachse x, welche mit der zentralen Achse des Gefäßaufnahmebereiches 4 übereinstimmt. Durch die Rotation des Drehtellers 23 rotieren auch die darauf angeordneten elektrischen Kontakte 5, 6 des Gefäßes 3. Somit kann die Position der elektrischen Kontakte 5, 6 auch dann verändert werden, wenn das Gefäß 3 als solches seine Orientierung relativ zu dem Gefäßaufnahmebereich 4 der Küchenmaschine 1 beibehält.

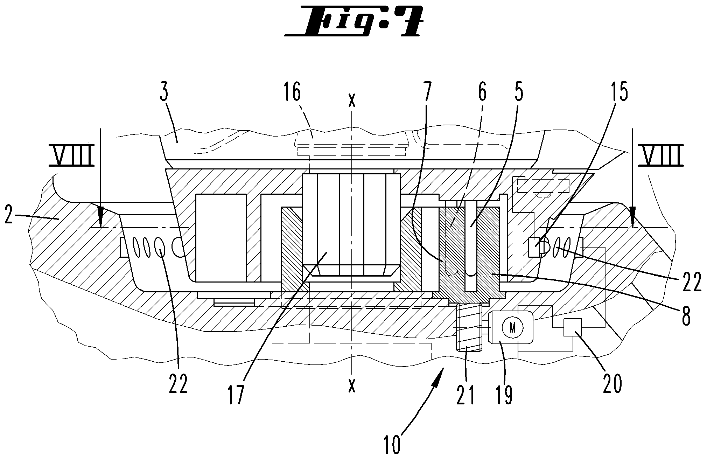

Der Positionierungseinrichtung 10 des Gefäßes 3 ist eine an dem Gefäßaufnahmebereich 4 angeordnete Detektionseinrichtung 15 zugeordnet, welche ausgebildet ist, die aktuelle Position der elektrischen Kontakte 5, 6 des Gefäßes 3 zu detektieren. Die Detektionseinrichtung 15 ist hier ein Ultraschallsensor, welcher ausgebildet ist, kodierte Markierungen 22 - beispielsweise in der Form von Materialaussparungen - zu detektieren, welche in derselben horizontalen Ebene wie die Detektionseinrichtung 15 angeordnet sind. Der Detektionseinrichtung 15 ist des Weiteren eine Auswerte- und Steuereinrichtung 20 (vergleiche Figur 7) zugeordnet, welche ein Detektionssignal von der Detektionseinrichtung 15 empfängt. Dieses Detektionssignal beinhaltet (in kodierter Form) die aktuelle Position der elektrischen Kontakte 5, 6. Die Auswerte- und Steuereinrichtung 20 vergleicht die detektierte Position der elektrischen Kontakte 5, 6 des Gefäßes 3 (Ist-Position) mit der Position der elektrischen Kontakte 7, 8 des Gefäßaufnahmebereiches 4 (Soll-Position). Als Vergleichsergebnis ermittelt die Auswerte- und Steuereinrichtung 20 eine Winkeldifferenz zwischen den elektrischen Kontakten 5, 6 des Gefäßes 3 und den elektrischen Kontakten 7, 8 des Gefäßaufnahmebereiches 4. Die Auswerte- und Steuereinrichtung 20 steuert anschließend die Stellmechanik 21 und damit auch eine Rotation des Drehtellers 23, um die Ist-Position in die Soll-Position zu verlagern, d. h. eine Kontaktstellung der elektrischen Kontakte 5, 6, 7, 8 herbeizuführen. Anschließend oder auch während des Betriebs der Stellmechanik 21 bzw. des Drehtellers 23 misst die Detektionseinrichtung 15 weiterhin die aktuelle Position der elektrischen Kontakte 5, 6 des Gefäßes 3.

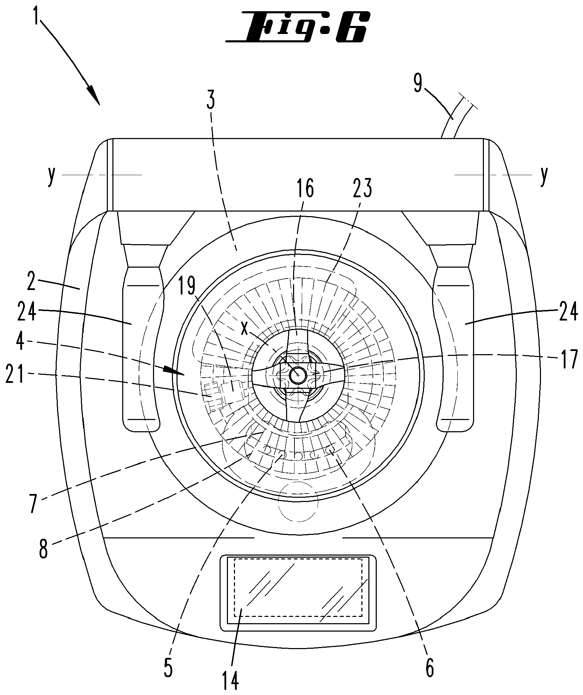

Figur 6 zeigt eine Draufsicht auf eine Küchenmaschine 1, in deren Gefäßaufnahmebereich 4 ein Gefäß 3 gemäß Figur 3 eingesetzt ist. Zu erkennen ist insbesondere die Überschneidung der Kreisbahnabschnitte der auf dem Drehteller 23 angeordneten elektrischen Kontakte 5, 6 des Gefäßes 3 und der ortsfesten elektrischen Kontakte 7, 8 des Gefäßaufnahmebereiches 4.

Die Figuren 7 bis 9 zeigen eine zweite Ausführungsvariante der Erfindung, bei welcher die Positionierungseinrichtung 10 an dem Gefäßaufnahmebereich 4 der Küchenmaschine 1 angeordnet ist.

Wie in Figur 7 dargestellt verfügt die Positionierungseinrichtung 10 über einen Elektromotor 19, eine Stellmechanik 21 und einen Drehteller 23. Der Elektromotor 19 ist an eine Spannungsversorgung 9 (in Figur 4 dargestellt) der Küchenmaschine 1 angeschlossen. Der Positionierungseinrichtung 10 ist eine Detektionseinrichtung 15 zugeordnet, welche an dem Gefäß 3 angeordnet ist. Die Detektionseinrichtung 15 weist beispielsweise eine Reflektionslichtschranke auf. Diese verfügt über eine LED, welche - in Bezug auf eine Richtung ausgehend von der zentralen Achse x des Gefäßes 3 - radial nach außen emittiert. Korrespondierend dazu weist der Gefäßaufnahmebereich 4 der Küchenmaschine 1 Markierungen 22 auf, welche beispielsweise in regelmäßigen Abständen an einem inneren Umfangsbereich des Gefäßaufnahmebereiches 4 angeordnet sind. Die Markierungen 22 können Materialaussparungen sein, durch welche das emittierte Licht hindurchtreten kann, oder reflektierende Teilbereiche, die einen höheren Reflektionsgrad aufweisen als die Teilbereiche außerhalb der Markierungen 22. Die Detektionseinrichtung 15 steht in Kommunikationsverbindung mit der Auswerte- und Steuereinrichtung 20 der Küchenmaschine 1. Anhand der Markierungen 22 kann die Auswerte- und Steuereinrichtung 20 darauf schließen, in welcher aktuellen Stellung sich die elektrischen Kontakte 5, 6 des Gefäßes 3 zu den elektrischen Kontakten 7, 8 des Gefäßaufnahmebereiches 4 befinden. Insbesondere können die Markierungen 22 zu diesem Zweck kodiert sein. Alternativ ist es auch möglich, dass die aktuelle Stellung der elektrischen Kontakte 5, 6 ausgehend von einer Null-Position durch Abzählen der Markierungen 22 ermittelt wird. In Abhängigkeit von dem Vergleichsergebnis zwischen der aktuellen Position der elektrischen Kontakte 5, 6 des Gefäßes 3 (Soll-Position) und der Position der elektrischen Kontakte 7, 8 des Gefäßaufnahmebereiches 4 (Ist-Position) verlagert die Positionierungseinrichtung 10 den Drehteller 23 mit den elektrischen Kontakten 7, 8 des Gefäßaufnahmebereiches in die Soll-Position. Die jeweils aktuelle Stellung kann wiederum durch die Detektionseinrichtung 15 überprüft werden.

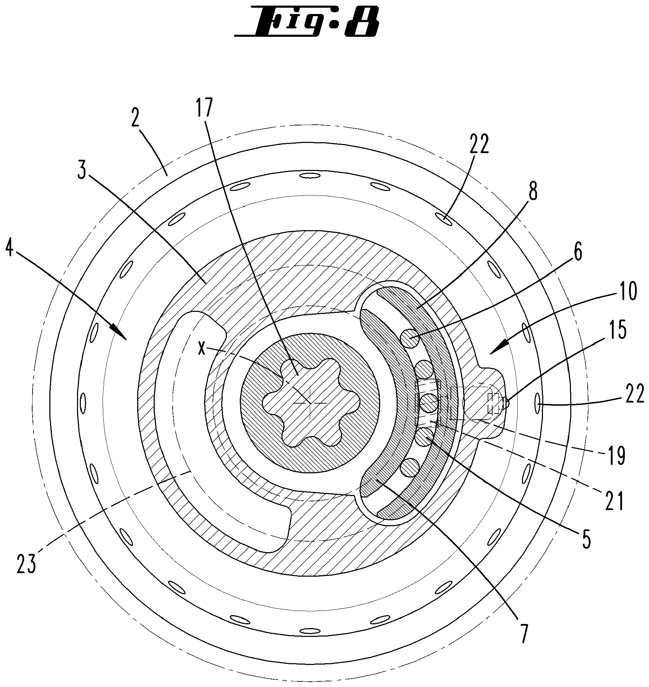

Figur 8 zeigt einen horizontalen Schnitt durch eine Ebene des Gefäßaufnahmebereiches 4 bzw. des Gefäßes 3, in welcher die elektrischen Kontakte 5, 6, 7, 8 angeordnet sind. In der Figur ist die Kontaktstellung der elektrischen Kontakte 5, 6, 7, 8 dargestellt, in welcher die elektrischen Kontakte 5, 6 des Gefäßes 3 zwischen den elektrischen Kontakten 7, 8 des Gefäßaufnahmebereiches 4 angeordnet sind. In der Kontaktstellung korrespondiert die Position der Detektionseinrichtung 15 mit der Position einer Markierung 22. Die Auswerte- und Steuereinrichtung 20 schließt in diesem Fall darauf, dass die Kontaktstellung erreicht ist.

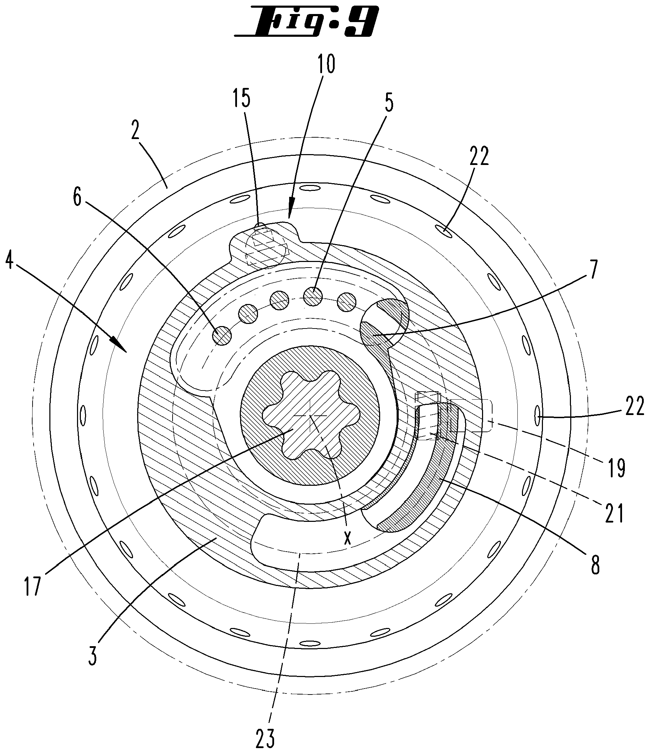

In Figur 9 ist demgegenüber eine Trennstellung der elektrischen Kontakte 5, 6, 7, 8 dargestellt, in welcher die Kontakte 5, 6 des Gefäßes 3 und die Kontakte 7, 8 des Gefäßaufnahmebereiches 4 nicht in Kontakt stehen, d. h. nicht in demselben Winkelbereich der durch die Kontakte 5, 6 bzw. der durch die Kontakte 7, 8 aufgezeigten Kreisbahnabschnitte liegen. In diesem Fall erkennt die Auswerte- und Steuereinrichtung 20, dass die der Detektionseinrichtung 15 benachbarte Markierung 22 eine Kodierung aufweist, welche nicht der Kontaktstellung entspricht. Daraufhin übermittelt die Auswerte- und Steuereinrichtung 20 einen Befehl zur Rotation des Drehtellers 23 an die Positionierungseinrichtung 10.

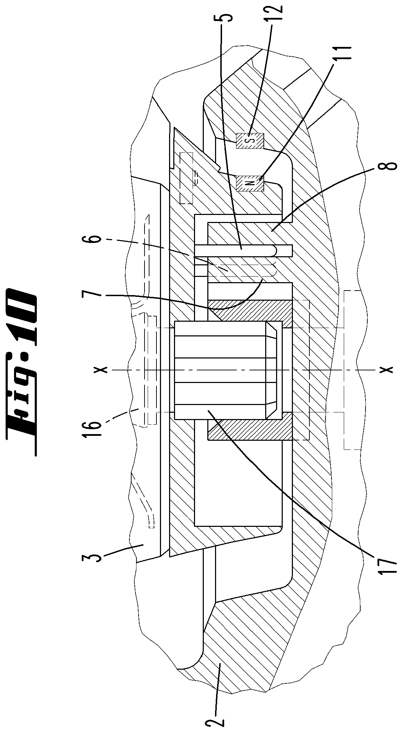

Figur 10 zeigt eine dritte Ausführungsvariante der Erfindung, bei welcher das Gefäß 3 und der Gefäßaufnahmebereich 4 mit korrespondierenden Magneten 11,12 ausgestattet sind. Sofern das Gefäß 3 nicht in der gewünschten Kontaktstellung in den Gefäßaufnahmebereich 4 eingesetzt ist, wird das Gefäß 3 aufgrund der Magnetkraft automatisch in die Kontaktstellung gezogen (rotiert). Zur Erleichterung der Rotation - d. h. Überwindung von Reibungskräften - kann das Gefäß 3 auf einem Drehteller 23 angeordnet sein (nicht dargestellt). Anstelle eines separaten Magneten 11 an dem Gefäßaufnahmebereich 4 und eines separaten Magneten 12 an dem Gefäß 3 kann einer der Magnete, bevorzugt der Magnet 11 des Gefäßes 3, auch durch einen magnetischen oder magnetisierbaren Teilbereich des Gefäßes 3 gebildet sein. Beispielsweise kann ein Teilbereich des Gefäßes 3 in Umfangsrichtung ein magnetisches Material, beispielsweise Eisen oder Nickel, aufweisen.

### Bezugszeichenliste:

- 1: Küchenmaschine
- 2: Gehäuse
- 3: Gefäß
- 4: Gefäßaufnahmebereich
- 5: Elektrischer Kontakt
- 6: Elektrischer Kontakt
- 7: Elektrischer Kontakt
- 8: Elektrischer Kontakt
- 9: Spannungsversorgung
- 10: Positionierungseinrichtung
- 11: Magnet
- 12: Magnet
- 13: Deckel
- 14: Display
- 15: Detektionseinrichtung
- 16: Rührwerk
- 17: Rührwerkanschluss
- 18: Rührwerkfortsatz
- 19: Elektromotor
- 20: Auswerte- und Steuereinrichtung
- 21: Stellmechanik
- 22: Markierung
- 23: Drehteller
- 24: Verriegelungselement

- x: Achse

## Patentansprüche

1. Küchenmaschine (1), insbesondere Mixgerät, mit einem Gehäuse (2), in welchem ein Gefäß (3) angeordnet ist, wobei das Gehäuse (2) einen Gefäßaufnahmebereich (4) aufweist, mit welchem das Gefäß (3) verbindbar ist, wobei das Gefäß (3) und der Gefäßaufnahmebereich (4) elektrische Kontakte (5, 6, 7, 8) zum Anschluss einer elektrischen Einrichtung des Gefäßes (3), insbesondere einer Heizeinrichtung und/ oder einer Messeinrichtung, an eine Spannungsversorgung (9) der Küchenmaschine (1) aufweisen, **dadurch gekennzeichnet, dass** der Gefäßaufnahmebereich und/ oder das Gefäß (3) eine Positionierungseinrichtung (10) aufweisen, welche ausgebildet ist, die elektrischen Kontakte (5, 6) des Gefäßes (3) und die elektrischen Kontakte (7, 8) des Gefäßaufnahmebereiches (4) aktiv zueinander zu positionieren, so dass diese aus einer Trennstellung in eine Kontaktstellung versetzbar sind, um eine elektrische Verbindung zwischen dem Gefäß (3) und der Küchenmaschine (1) herzustellen, wobei die Kontakte (5, 6) des Gefäßes (3) beweglich an dem Gefäß (3) und/ oder die Kontakte (7, 8) des Gefäßaufnahmebereiches (4) beweglich an dem Gefäßaufnahmebereich (4) angeordnet sind.

2. Küchenmaschine (1) nach Anspruch 1, **dadurch gekennzeichnet, dass** die Positionierungseinrichtung (10) einen Drehteller (23) aufweist, auf welchem die Kontakte (5, 6) des Gefäßes (3) oder die Kontakte (7, 8) des Gefäßaufnahmebereiches (4) angeordnet sind.

3. Küchenmaschine (1) nach Anspruch 1 oder 2, **dadurch gekennzeichnet, dass** die Positionierungseinrichtung (10) einen Elektromotor zur Positionierung der Kontakte (5, 6, 7, 8) aufweist.

4. Küchenmaschine (1) nach Anspruch 1, **dadurch gekennzeichnet, dass** die Positionierungseinrichtung (10) Federelemente aufweist, mittels welcher die Kontakte (5, 6) des Gefäßes (3) und/ oder die Kontakte (7, 8) des Gefäßaufnahmebereiches (4) federbeaufschlagt sind.

5. Küchenmaschine (1), insbesondere Mixgerät, mit einem Gehäuse (2), in welchem ein Gefäß (3) angeordnet ist, wobei das Gehäuse (2) einen Gefäßaufnahmebereich (4) aufweist, mit welchem das Gefäß (3) verbindbar ist, wobei das Gefäß (3) und der Gefäßaufnahmebereich (4) elektrische Kontakte (5, 6, 7, 8) zum Anschluss einer elektrischen Einrichtung des Gefäßes (3), insbesondere einer Heizeinrichtung und/ oder einer Messeinrichtung, an eine Spannungsversorgung (9) der Küchenmaschine (1) aufweisen, **dadurch gekennzeichnet, dass** der Gefäßaufnahmebereich und/ oder das Gefäß (3) eine Positionierungseinrichtung (10) aufweisen, welche ausgebildet ist, die elektrischen Kontakte (5, 6) des Gefäßes (3) und die elektrischen Kontakte (7, 8) des Gefäßaufnahmebereiches (4) so zueinander zu positionieren, dass diese aus einer Trennstellung in eine Kontaktstellung versetzbar sind, um eine elektrische Verbindung zwischen dem Gefäß (3) und der Küchenmaschine (1) herzustellen, wobei die Positionierungseinrichtung (10) Magnete (11,12) aufweist, und wobei ein erster Magnet (11) an dem Gefäßaufnahmebereich (4) und ein zweiter Magnet (12) an dem Gefäß (3) angeordnet ist.

6. Küchenmaschine (1) nach einem der vorhergehenden Ansprüche, **dadurch gekennzeichnet, dass** die Küchenmaschine (1) eine Detektionseinrichtung (15) aufweist, welche ausgebildet ist, eine aktuelle Position der Kontakte (5, 6, 7, 8) zu detektieren.

7. Küchenmaschine (1) nach Anspruch 6, **dadurch gekennzeichnet, dass** die Detektionseinrichtung (15) der Positionierungseinrichtung (12) zugeordnet ist.

8. Küchenmaschine (1) nach Anspruch 6 oder 7, **dadurch gekennzeichnet, dass** die Küchenmaschine (1) eine Auswerte- und Steuereinrichtung (20) aufweist, welche ausgebildet ist, eine von der Detektionseinrichtung (15) detektierte aktuelle Position der Kontakte (5, 6, 7, 8) mit einer für die elektrische Verbindung notwendigen Position der Kontakte (5, 6, 7, 8) zu vergleichen und in Abhängigkeit von dem Vergleichsergebnis einen Positionierungsbefehl an die Positionierungseinrichtung (10) zu übermitteln.

## Claims

1. A kitchen appliance (1), in particular a mixer, comprising a housing (2), on which a vessel (3) is arranged, wherein the housing (2) has a vessel receiving area (4), to which the vessel (3) can be connected, wherein the vessel (3) and the vessel receiving area (4) have electric contacts (5, 6, 7, 8) for connecting an electric device of the vessel (3), in particular a heating device and/or a measuring device, to a power supply (9) of the kitchen appliance (1), **characterized in that** the vessel receiving area and/or the vessel (3) have a positioning device (10), which is embodied to position the electric contacts (5, 6) of the vessel (3) and the electric contacts (7, 8) of the vessel receiving area (4) relative to one another in an active manner, so that they can be transferred from a separated position into a contact position, so as to establish an electric connection between the vessel (3) and the kitchen appliance (1), wherein the contacts (5, 6) of the vessel (3) are movably arranged on the vessel (3) and/or the contacts (7, 8) of the vessel receiving area (4) are movably arranged on the vessel receiving area (4).

2. The kitchen appliance (1) according to claim 1, **characterized in that** the positioning device (10) has a rotary plate (23), on which the contacts (5, 6) of the vessel (3) or the contacts (7, 8) of the vessel receiving area (4) are arranged.

3. The kitchen appliance (1) according to claim 1 or 2, **characterized in that** the positioning device (10) has an electric motor for positioning the contacts (5, 6, 7, 8) .

4. The kitchen appliance (1) according to claim 1, **characterized in that** the positioning device (10) has spring elements, by means of which the contacts (5, 6) of the vessel (3) and/or the contacts (7, 8) of the vessel receiving area (4) are spring-loaded.

5. A kitchen appliance (1), in particular a mixer, comprising a housing (2), on which a vessel (3) is arranged, wherein the housing (2) has a vessel receiving area (4), to which the vessel (3) can be connected, wherein the vessel (3) and the vessel receiving area (4) have electric contacts (5, 6, 7, 8) for connecting an electric device of the vessel (3), in particular a heating device and/or a measuring device, to a power supply (9) of the kitchen appliance (1), **characterized in that** the vessel receiving area and/or the vessel (3) have a positioning device (10), which is embodied to position the electric contacts (5, 6) of the vessel (3) and the electric contacts (7, 8) of the vessel receiving area (4) to one another in such a manner that they can be transferred from a separated position into a contact position, so as to establish an electric connection between the vessel (3) and the kitchen appliance (1), wherein the positioning device (10) has magnets (11, 12), and wherein a first magnet (11) is arranged on the vessel receiving area (4) and a second magnet (12) is arranged on the vessel (3).

6. The kitchen appliance (1) according to one of the preceding claims, **characterized in that** the kitchen appliance (1) has a detection device (15), which is embodied to detect a current position of the contacts (5, 6, 7, 8).

7. The kitchen appliance (1) according to claim 6, **characterized in that** the detection device (15) is assigned to the positioning device (12).

8. The kitchen appliance (1) according to claim 6 or 7, **characterized in that** the kitchen appliance (1) has an analysis and control device (20), which is embodied to compare a current position of the contacts (5, 6, 7, 8) detected by the detection device (15) to a position of the contacts (5, 6, 7, 8), which is required for the electric connection, and to transmit a positioning command to the positioning device (10) as a function of the result of the comparison.

## Revendications

1. Robot de cuisine (1), en particulier un mixeur, comprenant un boîtier (2) dans lequel est agencée une cuve (3), dans lequel le boîtier (2) présente une région de réception de cuve (4) avec laquelle la cuve (3) est susceptible d'être liée, dans lequel la cuve (3) et la région de réception de cuve (4) présentent des contacts électriques (5, 6, 7, 8) pour le raccordement d'un dispositif électrique de la cuve (3), en particulier un dispositif de chauffage et/ou un dispositif de mesure, à une alimentation électrique (9) du robot de cuisine (1), **caractérisé en ce que** la région de réception de cuve et/ou la cuve (3) présentent un dispositif de positionnement (10) lequel est conçu pour positionner les contacts électriques (5, 6) de la cuve (3) et les contacts électriques (7, 8) de la région de réception de cuve (4) activement les uns par rapport aux autres de manière à ce que ceux-ci soient susceptibles d'être déplacés d'une position de séparation à une position de contact pour établir une liaison électrique entre la cuve (3) et le robot de cuisine (1), dans lequel les contacts (5, 6) de la cuve (3) sont agencés de manière mobile sur la cuve (3) et/ou les contacts (7, 8) de la région de réception de cuve (4) sont agencés de manière mobile dans la région de réception de cuve (4).

2. Robot de cuisine (1) selon la revendication 1, **caractérisé en ce que** le dispositif de positionnement (10) comprend une assiette rotative (23) sur laquelle sont agencés les contacts (5, 6) de la cuve (3) ou les contacts (7, 8) de la région de réception de cuve (4).

3. Robot de cuisine (1) selon la revendication 1 ou 2, **caractérisé en ce que** le dispositif de positionnement (10) comprend un moteur électrique pour positionner les contacts (5, 6, 7, 8).

4. Robot de cuisine selon la revendication 1, **caractérisé en ce que** le dispositif de positionnement (10) comprend des éléments élastiques au moyen desquels les contacts (5, 6) de la cuve (3) et/ou les contacts (7, 8) de la région de réception de cuve (4) sont sollicités élastiquement.

5. Robot de cuisine (1), en particulier un mixeur, comprenant un boîtier (2) dans lequel est agencée une cuve (3), dans lequel le boîtier (2) présente une région de réception de cuve (4) avec laquelle la cuve (3) est susceptible d'être liée, dans lequel la cuve (3) et la région de réception de cuve (4) présentent des contacts électriques (5, 6, 7, 8) pour le raccordement d'un dispositif électrique de la cuve (3), en particulier un dispositif de chauffage et/ou un dispositif de mesure, à une alimentation électrique (9) du robot de cuisine (1), **caractérisé en ce que** la région de réception de cuve et/ou la cuve (3) présentent un dispositif de positionnement (10) lequel est conçu pour positionner les contacts électriques (5, 6) de la cuve (3) et les contacts électriques (7, 8) de la région de réception de cuve (4) les uns par rapport aux autres de manière à ce que ceux-ci soient susceptibles d'être déplacées d'une position de séparation à une position de contact pour établir une liaison électrique entre la cuve (3) et le robot de cuisine (1), dans lequel le dispositif de positionnement (10) comprend des aimants (11, 12) et dans lequel un premier aimant (11) est agencé dans la région de réception de cuve (4) et un deuxième aimant sur la cuve (3).

6. Robot de cuisine (1) selon l'une des revendications précédentes, **caractérisé en ce que** le robot de cuisine (1) comprend un dispositif de détection (15) lequel est conçu pour détecter une position actuelle des contacts (5, 6, 7, 8).

7. Robot de cuisine (1) selon la revendication 6, **caractérisé en ce que** le dispositif de détection (15) est associé au dispositif de positionnement (12).

8. Robot de cuisine (1) selon la revendication 6 ou 7, **caractérisé en ce que** le robot de cuisine (1) présente un dispositif d'évaluation et de commande (20) lequel est conçu pour comparer une position actuelle des contacts (5, 6, 7, 8) détectée par le dispositif de détection (15) avec une position (5, 6, 7, 8) requise pour la liaison électrique des contacts (5, 6, 7, 8) et de transmettre une instruction de positionnement au dispositif de positionnement (10) qui dépend du résultat de la comparaison.
